# EUROPÄISCHE PATENTSCHRIFT

(11) **EP 3 789 794 B1**
(45) Veröffentlichungstag und Bekanntmachung des Hinweises auf die Patenterteilung: **26.03.2025**
(21) Anmeldenummer: 19195290.2
(22) Anmeldetag: 04.09.2019
(51) Int. Cl.: G01S 17/86, G01S 7/48, G01S 17/89, G01S 17/931, G01S 17/10

(54) **VERFAHREN UND VORRICHTUNG ZUR DISTANZMESSUNG**
METHOD AND DEVICE FOR DISTANCE-MEASURING
PROCÉDÉ ET DISPOSITIF DE MESURE DE LA DISTANCE

(43) Veröffentlichungstag der Anmeldung: 10.03.2021
(73) Patentinhaber: MicroVision, Inc., Redmond, WA 98052 (US)
(72) Erfinder: Kabuk, Ünsal, 22143 Hamburg (DE)
(74) Vertreter: RGTH

(56) Entgegenhaltungen:
- EP-A1- 3 531 167
- WO-A1-2018/100082
- WO-A1-2018/126248
- DE-A1- 10 147 807
- DE-A1- 102011 089 629
- DE-T5- 112017 005 641
- US-A1- 2011 102 763
- US-A1- 2017 272 651
- US-A1- 2018 113 216
- US-A1- 2019 178 974

## Beschreibung

### Technisches Gebiet

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, sind aus dem Stand der Technik bekannt. Sie beruhen auf dem Time-of-Flight-Prinzip, wobei periodisch Messpulse ausgesandt werden, die an Objekten reflektiert werden und die reflektierten Messpulse detektiert werden. Aus der Bestimmung der Laufzeit der Messpulse von dem Sensor zu den Objekten und zurück kann mithilfe der Lichtgeschwindigkeit auf die Distanz zu diesen Objekten geschlossen werden.

Eine entsprechende Vorrichtung zur optischen Distanzmessung ist typischerweise als LIDAR-Sensor (Abkürzung für "Light Detection and Ranging) ausgebildet, die aus einer Sende- und einer Empfangseinheit besteht, die einen Messbereich effizient abtasten können, ohne dabei mechanische Teile zu verwenden. Sendeseitig können dabei elektronische Scanverfahren verwendet werden, beispielsweise die selektive Adressierung von Laserdioden oder Optical Phased Arrays. Empfangsseitig können ebenfalls Arrays von Empfangselementen eingesetzt werden, um die reflektierten Messpulse zu empfangen. Die große Menge an Empfangselementen kann, bedingt durch die begrenzte Speichermenge, die zu handhabende Datenmenge und die Leistungsaufnahme der Empfangseinheit nicht simultan ausgewertet werden. Dies begrenzt im Stand der Technik die Anzahl an Empfangselementen, die innerhalb eines Zeitintervalls (Framerate) ausgelesen und verarbeitet werden können.

Empfangsseitig lassen sich die Auflösung und der Messbereich durch die Verwendung von verschiedenen Optiken verändern, jedoch ist die Anzahl an Empfangselementen stets vorgegeben. Das führt dazu, dass ein großer Messbereich lediglich mit geringer Auflösung vermessen werden kann, da die Anzahl der Empfangselemente vorgegeben ist. Des Weiteren sind durch die Divergenz der einzelnen Empfangselemente auch die Reichweite und das Signal-to-Noise-Verhältnis (SNR) geringer, sodass die Performance des Verfahrens sowie der Vorrichtung reduziert sind.

US 2017/272651 A1 offenbart ein Verfahren die benötigte Leistung für eine Time-of-Flight Messung zu reduzieren.

DE 10 2011 089 629 A1 betrifft eine Lichtlaufzeitkamera.

In US 2019/0178974 A1 wird ein Verfahren zur Ermittlung von Punktwolken hinsichtlich eines Umfeldes eines Fahrzeuges offenbart.

US 2011/010273 A1 offenbart ein 3D Abbildungssystem.

WO 2018/100082 A1 beschreibt eine Verfahren und eine Vorrichtung zur Time-of-Flight Messung.

US 2018/0113216 A1 betrifft ein Scanvorrichtung, während WO 2018/126248 A1 einen Mikrospiegel-Array offenbart.

DE 10147 807 A1 betrifft ein Verfahren zur dreidimensionalen Erfassung von Objekten oder Szenen.

DE 11 2017 005 641 T5 offenbart ein Histogramm-Ausleseverfahren und Histogramm-Ausleseschaltkreis zum Ermitteln der Flugzeit eines Photons.

EP 3 531 167 A1 betrifft ein Verfahren und eine Vorrichtung zur optischen Distanzmessung.

### Darstellung der Erfindung: Aufgabe, Lösung, Vorteile

Die Aufgabe der vorliegenden Erfindung ist es, ein Verfahren zur optischen Distanzmessung und eine entsprechende Vorrichtung derart zu verbessern, dass kostengünstig und zuverlässig ein möglichst großer Messbereich derart vermessen werden kann, dass eine möglichst hohe Reichweite, jedoch gleichzeitig eine möglichst hohe Auflösung interessanter Bereiche, erreicht werden.

Gelöst wird die vorgenannte Aufgabe durch ein Verfahren zur optischen Distanzmessung, wobei das Verfahren eine Erstellung mindestens eines Frames, insbesondere einer Vielzahl von Frames, umfasst. Im Rahmen des Frames werden 3D-Informationen zumindest eines Unterbereichs eines Messbereichs ermittelt. Ein Frame wird als Einzelbild verstanden. Unter dem Begriff "3D-Informationen" sind insbesondere Distanzinformationen, in anderen Worten Tiefeninformationen, über mindestens einen Unterbereich des Messbereichs zu verstehen. Insbesondere wird eine 3D-Tiefenkarte mindestens eines Unterbereiches des Messbereiches ermittelt.

Es werden mehrere Frames erstellt, vor allem zeitlich hintereinander. Die Rate, mit der das Verfahren Frames erstellt, wird insbesondere als Framerate bezeichnet. Ein Frame kann somit als 3D-Informationen, in anderen Worten eine dreidimensionale "Abbildung", mindestens eines Unterbereiches eines Messbereiches angesehen werden, der innerhalb des dem Frame zugewiesenen Zeitintervalls ermittelt wird. Vorzugsweise handelt es sich bei dem Unterbereich um einen Interessenbereich.

Das Verfahren umfasst die Aufteilung eines Zeitbudgets zur Erstellung des Frames auf eine erste Phase zur Bestimmung von mindestens einem Interessenbereich und eine zweite Phase zur Ermittlung von 3D-Informationen aus dem mindestens einen Interessenbereich. Bei dem Zeitbudget handelt es sich insbesondere um ein Zeitintervall, das dem Frame zugewiesen ist. Dieses ergibt sich insbesondere aus der Framerate.

Bei dem Begriff "Interessenbereich" handelt es sich insbesondere um eine "Region of Interest". Bei dem Interessenbereich handelt es sich erfindungsgemäß um einen Unterbereich des Messbereichs. Unter dem Begriff "Messbereich" ist vor allem ein dreidimensionaler Raum gemeint, aus dem Reflektionen der ausgesandten Messpulse empfangen werden können und/oder sollen. In anderen Worten ist unter dem Begriff ein zu messender Bereich zu verstehen. Der Messbereich kann, muss jedoch nicht technisch bedingt sein, sondern kann bewusst gewählt werden. Er ist somit ein Bereich, der mittels des erfindungsgemäßen Verfahrens "vermessen", in anderen Worten abgetastet, werden soll.

Das Verfahren umfasst die Durchführung der ersten Phase, wobei im Rahmen der ersten Phase mittels einer Sendeeinheit eine Vielzahl von Messpulsen ausgesandt wird und reflektierte Messpulse von einer Empfangseinheit empfangen werden.

Die Sendeeinheit umfasst insbesondere eine Vielzahl von Sendeelementen, wobei vorzugsweise jedes Sendeelement mindestens einen Messpuls in einen definierten Unterbereich des Messbereichs versendet. Jedes Sendeelement ist somit einem bestimmten Unterbereich, in anderen Worten einem Raumelement, des Messbereichs zugeordnet. Gleiches gilt für die Empfangseinheit. Diese umfasst eine Vielzahl von Empfangselementen, wobei jedem Empfangselement ein Unterbereich des Messbereiches zugeordnet ist. Insbesondere ergibt sich dabei eine eineindeutige Zuordnung zwischen den jeweiligen Sendeelementen der Sendeeinheit und den Empfangselementen der Empfangseinheit. Aus der Tatsache, welches Empfangselement somit einen Messpuls empfängt, kann ein Rückschluss über die Position des reflektierenden Objektes, an dem der Messpuls reflektiert wurde, geschlossen werden. Insbesondere ist jedes Sendeelement einzeln ansteuerbar. Ferner ist jedes Empfangselement vor allem einzeln auswertbar.

Im Rahmen der ersten Phase werden 2D-Informationen des Messbereichs ermittelt. Es wird ein 2D-Intensitätsbild des Messbereichs erstellt. In anderen Worten kann somit die empfangene akkumulierte Intensität für jedes Empfangselement ermittelt werden um das Intensitätsbild zu erstellen.

Insbesondere wird im Rahmen der ersten Phase keine Tiefeninformation ausgewertet. Erfindungsgemäß wird im Rahmen der ersten Phase somit keine 3D-Information des Messbereichs ermittelt. Es werden die Laufzeiten der Messpulse der ersten Phase nicht ausgewertet. Es wird aus den 2D-Informationen mindestens ein Interessenbereich bestimmt. In anderen Worten identifiziert das Verfahren mindestens einen Interessenbereich.

Das Verfahren umfasst ferner die Durchführung der zweiten Phase. Im Rahmen der zweiten Phase wird mittels einer Sendeeinheit eine Vielzahl von Messpulsen ausgesandt und reflektierte Messpulse von der Empfangseinheit empfangen. Bei der Empfangseinheit der zweiten Phase handelt es sich um dieselbe Empfangseinheit der ersten Phase. Es wird somit empfangsseitig die gleiche Einheit für die erste Phase und die zweite Phase verwendet. Grundsätzlich kann eine Kamera die Ermittlung von 2D-Informationen unterstützen, indem diese ein Bild des Messbereichs bereitstellt. Insbesondere werden allerdings die 2D-Informationen, die mithilfe der ersten Phase ermittelt werden, nicht extern bereitgestellt, in anderen Worten mittels weiterer Sensoren, bspw. eines Radarsensors oder einer Kamera, sondern intern, d.h. mit derselben Vorrichtung zur Durchführung des Verfahrens, ermittelt.

Im Rahmen der zweiten Phase werden 3D-Informationen des mindestens einen Interessenbereichs ermittelt. Insbesondere werden im Rahmen der zweiten Phase Messpulse in den mindestens einen, zuvor bestimmten, Interessenbereich ausgesandt. Insbesondere werden selektiv Sendeelemente angesteuert, die mit der entsprechenden räumlichen Position des Interessenbereichs im Messbereich korrespondieren. Anhand der reflektierten Messpulse wird die Laufzeit der Messpulse bestimmt und somit Distanzinformationen und somit auch 3D-Informationen des mindestens einen Interessenbereichs ermittelt. Im Rahmen der zweiten Phase können Messpulse auch in andere Unterbereiche des Messbereichs ausgesandt werden, die nicht als Interessenbereich identifiziert wurden. Die 3D-Informationen können im Rahmen einer 3D-Tiefenkarte mindestens eines Interessensbereiches vorliegen. Ferner kann eine 4D-Karte erstellt werden, indem Intensitätswerte, bspw. aus der ersten Phase, hinzugefügt werden.

Ferner kann das Verfahren noch weitere Phasen umfassen, wobei mindestens eine Phase eine erste Phase zur Bestimmung von mindestens einem Interessenbereich e und mindestens eine Phase eine zweite Phase zur Bestimmung von 3D-Informationen des mindestens einen Interessenbereich darstellt.

Jede 3D-Informationen, insbesondere ein Distanzwert, wird mittels eines Histogramms ermittelt. Insbesondere werden im Rahmen der ersten und/oder der zweiten Phase mehrere Messzyklen durchgeführt. Bei einem Messzyklus werden pro Sendeelement bzw. relevantem Sendeelement (relevant, da bspw. es einem relevanten Raumbereich zugeordnet ist) mindestens ein Messpuls versandt. Von allen empfangenen Messpulsen wird die Laufzeit ermittelt. Die Laufzeiten aller Messpulse, die von einem Sendelement versandt werden und von dem zugehörigen Empfangselement empfangen werden, werden in ein Histogramm eingetragen. Ferner können auch die Laufzeiten mehrerer benachbarter Empfangselemente in ein gemeinsames Histogramm eingetragen. In anderen Worten kann pro Frame ein Histogramm pro Empfangselement bzw. Block von Empfangselementen erstellt werden. Aus jedem Histogramm wird ein Distanzwert ermittelt, der dann dem Raumelement, der mit dem Empfangselement bzw. dem Block von Empfangselementen korrespondiert, zugeordnet wird.

Insbesondere wird das obere Verfahren für alle Frames durchgeführt. Dabei kann die Aufteilung des Zeitbudgets zur Erstellung eines Frames auf die erste Phase und die zweite Phase dynamisch für jeden Frame festgelegt werden, insbesondere in Abhängigkeit von 2D- oder 3D-Informationen aus dem vorherigen Frame, oder festgelegt sein.

Insbesondere dient die erste Phase dazu, den Messbereich "grob" abzutasten, um möglicherweise interessante Bereiche (Interessenbereiche) zu identifizieren. Die zweite Phase zielt hingegen darauf ab diese interessanten Bereiche möglichst hochauflösend abzutasten. Insbesondere ist der Anteil des Zeitbudgets, der der ersten Phase zugeordnet wird, wesentlich geringer als der Anteil, der der zweiten Phase zugeordnet wird. Erfindungsgemäß entspricht der Anteil des Zeitbudgets für die erste Phase maximal 50 %, insbesondere maximal 30 %, des Anteils der zweiten Phase. Das gesamte Zeitbudget für die erste und die zweite Phase beträgt insbesondere mindestens 10 ms, vorzugsweise mindestens 20 ms, am meisten bevorzugt mindestens 30 ms, und/oder höchstens 100 ms, vorzugsweise höchstens 70 ms, am meisten bevorzugt höchstens 50 ms.

Die Messpulse, die in der ersten Phase ausgesandt werden, haben insbesondere eine Pulslänge von mindestens 100 Pikosekunden, ferner bevorzugt mindestens 1 Nanosekunde, bevorzugterweise mindestens 10 Nanosekunden und/oder höchstens 100 Nanosekunden, bevorzugterweise höchstens 50 Nanosekunden. Die Messpulse, die in der ersten Phase ausgesandt werden, können ferner eine Pulslänge von mindestens 1 Mikrosekunde, bevorzugterweise mindestens 10 Mikrosekunden und/oder höchstens 100 Mikrosekunden, bevorzugterweise höchstens 50 Mikrosekunden. Es können in der ersten Phase viele kurze und/oder wenige lange Messpulse mit vorgenannten Pulslängen ausgesandt werden. Die gesamte erste Phase kann daher eine Dauer von mindestens 1 ms, bevorzugterweise mindestens 5 ms und/oder höchstens 15 ms, insbesondere höchstens 10 ms, insbesondere höchstens 7 ms, aufweisen.

Die Messpulse, die in der zweiten Phase ausgesandt werden, haben insbesondere eine Pulslänge von mindestens 100 Pikosekunden, ferner bevorzugt mindestens 1 ns, insbesondere mindestens 2 ns, am meisten bevorzugt mindestens 3 ns, und/oder höchstens 50 ns, am meisten bevorzugt höchstens 30 ns.

Insbesondere kann das Verfahren für die erste Phase ausschließlich eine erste Sendeeinheit und für die zweite Phase ausschließlich eine zweite Sendeeinheit verwenden, wobei sich die erste Sendeeinheit und die zweite Sendeeinheit unterscheiden. Dies gilt insbesondere für mehrere Frames. Die erste Sendeeinheit und die zweite Sendeeinheit können vor allem identisch ausgebildet sein. Ferner können die Sendeeinheiten speziell für die ihnen zugewiesene Phase ausgebildet sein. Dabei kann die Sendeeinheit für die erste Phase LEDs als Sendeelemente umfassen, während die Sendeeinheit, die für die zweite Phase zuständig ist, VCSEL umfasst.

Ferner kann das Verfahren nur eine einzige Sendeeinheit verwenden, wobei das Verfahren die Sendeeinheit mittels zeitlichem Multiplexing für die erste Phase und für die zweite Phase verwendet. Aufgrund des zeitlichen Multiplexing können die Messpulse der ersten Phase und der zweiten Phase unterschieden werden.

In der zweiten Phase können im Vergleich zur ersten Phase vor allem Messpulse mit höherer Intensität und/oder größerer Pulslänge und/oder höherer Pulsrate, in anderen Worten mehr Messpulse pro Zeiteinheit, ausgesandt werden. Vor allem entspricht die Intensität und/oder Pulslänge und/oder Pulsrate der Messpulse der zweiten Phase mindestens dem 1,2-Fachen, bevorzugterweise mindestens dem 1,5-Fachen, am meisten bevorzugt mindestens dem 2-Fachen, des entsprechenden Parameters der ersten Phase. Ferner können in der zweiten Phase im Vergleich zur ersten Phase mehr Messzyklen durchgeführt werden und/oder mehr Messpulse pro Messzyklus ausgesandt werden.

Insbesondere kann die Pulsrate über das "Umlaufzeitlimit" erhöht werden. Bei dem Umlaufzeitlimit handelt es sich insbesondere um einen "Mindestabstand" zweier nacheinander ausgesandter Messpulse, da die doppelte Laufzeit des Messpulses bis zum Ende des Messbereichs abgewartet werden muss, um zwei ausgesandte Messpulse eindeutig voneinander unterscheiden zu können. Bei einer Überschreitung des Umlaufzeitlimits werden vor allem codierte Sequenzen verwendet, um empfangende Messpulse korrekt zuordnen zu können. Insbesondere indem Messpulse mit höherer Pulsintensität verwendet werden, wird mehr Energie in der zweiten Phase eingesetzt und dadurch die Reichweite erhöht. Ferner werden durch eine erhöhte Pulsrate mehr Messpulse verwendet und auch dadurch die Reichweite erhöht.

Die erste Phase kann insbesondere als Scanphase verstanden werden kann, wobei es sich nicht um ein Scannen im Sinne von einem kompletten Abtasten des Messbereichs handelt, sondern ein Scannen im Sinne eines Auffindens von interessanten Bereichen gemeint ist. Dagegen kann die zweite Phase insbesondere als fokussierte Messphase zum Erhalten von Tiefeninformationen verstanden werden. Somit kann sowohl die begrenzte Hardware als auch das begrenzte Zeitbudget effektiv genutzt werden, während gleichzeitig der SNR gesteigert wird. Es wird eine hohe Reichweite des Verfahrens und eine hohe Auflösung des mindestens einen Interessenbereichs erreicht, sodass es vor allem möglich ist sehr kleine Objekte in weiter Entfernung zu erkennen.

Das Verfahren kann das Festlegen einer Beleuchtung, insbesondere für die erste und/oder zweite Phase, umfassen, wobei dabei insbesondere festgelegt wird, welcher Unterbereich des Messbereichs oder ob der gesamte Messbereich beleuchtet wird. Im Rahmen der ersten Phase kann vor allem der gesamte Messbereich abgetastet werden. Die Beleuchtung würde dann den gesamten Messbereich umfassen.

Die Empfangselemente werden vor allem mittels Auswerteeinheiten ausgewertet. Im Rahmen der zweiten Phase können Empfangselemente zur Ermittlung der 3D-Informationen des mindestens einen Interessenbereichs Empfangselemente in Bezug auf den mindestens einen Interessenbereichs sowie Empfangselemente in Bezug auf mindestens einen außerhalb des mindestens einen Interessenbereichs liegenden Unterbereich des Messbereichs ausgewertet werden. Im Rahmen der Auswertung werden in Bezug auf den Interessenbereich zeitlich simultan mehr Empfangselemente ausgewertet als in dem außerhalb des mindestens einen Interessenbereichs liegenden Unterbereichs des Messbereichs. Ferner können Empfangselemente in Bezug auf den Interessenbereich weniger zusammengefasst ausgewertet werden im Vergleich zu dem außerhalb des mindestens einen Interessenbereichs liegenden Unterbereichs des Messbereichs.

Es können sowohl Messpulse in den Interessenbereich als auch in den außerhalb des mindestens einen Interessenbereichs liegenden Unterbereich des Messbereichs versandt werden. Die Messpulse, die in den Interessenbereich versandt werden, werden von einer ersten Gruppe von Sendeelementen versandt. Die erste Gruppe von Sendeelementen ist dem räumlichen Bereich des Interessenbereichs zugeordnet. Die erste Gruppe der Sendeelemente ist ferner entsprechenden Empfangselementen zugeordnet sind, und zwar einer ersten Gruppe von Empfangselementen. Anders herum werden in mindestens einen außerhalb des mindestens einen Interessenbereichs liegenden Unterbereich des Messbereichs von einer zweiten Gruppe von Sendeelementen Messpulse ausgesandt. Die zweite Gruppe korrespondiert mit dem Unterbereich und einer zweiten Gruppe von Empfangselementen.

Von der ersten Gruppe von Empfangselementen können im Vergleich zu der zweiten Gruppe von Empfangselementen mehr Empfangselemente zeitlich simultan ausgewertet werden, um eine möglichst hohe Auflösung zu erreichen. Dies wird insbesondere dadurch erreicht, dass möglichst viele Empfangselemente zu jeweiligen Auswerteeinheiten zugeordnet werden und somit individuell ausgewertet werden können. Außerhalb des Interessenbereichs, also betreffend die zweite Gruppe der Empfangselemente, können Empfangselemente zusammengefasst ausgewertet werden. Dies wird insbesondere dadurch erreicht, dass die zusammengefassten Empfangselemente einer gemeinsamen Auswerteeinheit zugeordnet werden, die die somit erhaltenen Informationen somit mittelt. Dadurch wird erreicht, dass der mindestens eine außerhalb des mindestens einen Interessenbereichs liegende Unterbereich des Messbereichs gröber aufgelöst wird. Insbesondere betrifft dies den gesamten Rest des Messbereichs bis auf die Interessenbereiche. Ferner können auch Unterbereiche des Messbereichs, die außerhalb der Interessenbereiche liegen, gar nicht auswertet werden.

Ebenfalls können betreffend den mindestens einen Interessenbereich, das heißt hinsichtlich der ersten Gruppe von Empfangselementen, Empfangselemente zusammengefasst ausgewertet werden, wobei weniger Empfangselemente zusammengefasst werden als die zweite Gruppe betreffend. Unter dem Begriff "weniger zusammengefasst" ist somit zu verstehen, dass weniger Empfangselemente derselben Auswerteeinheit zugeordnet sind. In anderen Worten sind von den Empfangselementen, die dem Interessenbereich zugeordnet sind, weniger Empfangselemente einer gemeinsamen Auswerteeinheit zugeordnet als in einem außerhalb des Interessenbereichs liegenden Unterbereich des Messbereichs. Insbesondere ist hinsichtlich des Interessenbereiches eine 1:1 Zuordnung zwischen Empfangselementen und Auswerteeinheiten gegeben. Insbesondere ist außerhalb eine 2:1 oder 3:1 oder 4:1 Zuordnung gegeben.

Zudem kann die erste Gruppe von Sendeelementen Messpulse aussenden, deren Pulsrate variiert. Ferner könnte die erste Gruppe von Sendelementen mehr Messzyklen durchführen als die zweite Gruppe von Sendeelementen. Außerdem können mehr Messpulse pro Messzyklus pro Sendelement versandt werden im Vergleich zur zweiten Gruppe von Sendeelementen. Es können die Pulslänge und die Pulsintensität der Messpulse der ersten Gruppe eingestellt werden, um ein Histogramm mit möglichst großen SNR zu erhalten. Von der zweiten Gruppe der Sendeelemente können die Pulsrate, die Anzahl der Messpulse bei einer Pulsrate, die Pulslängen und/oder Pulsintensitäten kleiner sein im Vergleich zu ersten Gruppe. Insgesamt werden die erwähnten Parameter abhängig vom gesamten Zeitbudget so eingestellt, dass eine Echtzeitfähigkeit des Systems ermöglicht ist.

Außerhalb der Interessenbereiche können die entsprechenden Empfangselemente insbesondere den übrigen Auswerteeinheiten zugeordnet oder auch gar nicht ausgewertet werden. Das Resultat ist eine Aufteilung des Messbereichs in sehr hoch auflösende Bereiche (die Interessenbereiche) und geringer aufgelöste Bereiche. Aufgrund dieses Prinzips ist es möglich, mit nur einer sehr begrenzten Anzahl an Auswerteeinheiten eine sehr hohe Anzahl an Empfangselementen auszuwerten.

Unter dem Begriff "weniger zusammengefasst" kann auch verstanden werden, dass Laufzeiten in Bezug auf mindestens einen Interessenbereich weniger zusammengefasst in Histogramme eingetragen im Vergleich zu Laufzeiten von Empfangselemente eines außerhalb des mindestens einen Interessenbereichs liegenden Unterbereichs des Messbereichs. Anders formuliert können bei der zweiten Gruppe von Empfangselementen die Laufzeiten mehrerer, benachbarter Empfangselemente in ein gemeinsames Histogramm eingetragen werden. Bspw. könnte die erste Gruppe so untergliedert sein, dass die Laufzeiten von 2, 3 oder 4 Empfangselementen in ein gemeinsames Histogramm eingetragen werden. Bei der ersten Gruppe von Empfangselementen können die Laufzeiten jedes Empfangselementes in ein eigenes Histogramm eingetragen werden oder zumindest die Anzahl der Empfangselemente, die einem gemeinsamen Histogramm zugeordnet ist, kleiner sein als bei der zweiten Gruppe. Der Effekt der "weniger zusammengefassten" Auswertung ist eine bessere Auflösung. Wenn zum Bsp. weniger Empfangselemente einem gemeinsamen Histogramm zugeordnet sind, ist die räumliche Auflösung besser, da der mittels des Histogramms ermittelte Distanzwert somit einem kleineren Pixelblock zugeordnet wird.

Im Rahmen der ersten Phase können verschiedene Interessenbereiche unterschiedlich relevant eingestuft werden, und zwar vorzugsweise im Vergleich zueinander. Das Verfahren umfasst somit vorteilhafterweise die Identifikation von unterschiedlich relevanten Interessenbereichen im Vergleich zueinander. Es können im Rahmen der Auswertung eines relevanteren Interessenbereichs zeitlich simultan mehr Empfangselemente ausgewertet werden im Vergleich zu einem weniger relevanten Interessenbereich und/oder wobei im Rahmen der Auswertung eines relevanteren Interessenbereichs Empfangselemente weniger zusammengefasst ausgewertet werden im Vergleich zu einem weniger relevanten Interessenbereich.

Insbesondere sind von den Empfangselementen, die einem relevanteren Interessenbereich zugeordnet sind, weniger Empfangselemente einer gemeinsamen Auswerteeinheit zugeordnet als in einem weniger relevanten Interessenbereich. Insbesondere ist hinsichtlich des relevanteren Interessenbereiches eine 1:1 Zuordnung zwischen Empfangselementen und Auswerteeinheiten gegeben. Vorzugweise ist hinsichtlich eines weniger relevanten Interessenbereiches eine 2:1 oder 3:1 oder 4:1 Zuordnung gegeben.

In einem weiteren Aspekt betrifft die vorliegende Erfindung eine Vorrichtung zur optischen Distanzmessung. Die Vorrichtung umfasst insbesondere eine Sendeeinheit zum Aussenden von Messpulsen für die erste Phase und eine Sendeeinheit zum Aussenden von Messpulsen für die zweite Phase. Dabei kann es sich um unterschiedliche Sendeeinheiten oder dieselbe Sendeeinheit handeln. Ferner umfasst die Vorrichtung eine einzige Empfangseinheit zum Empfangen reflektierter Messpulse der ersten Phase und der zweiten Phase.

Ferner umfasst die Vorrichtung Auswerteinheiten zur Auswertung der Empfangselemente der Empfangseinheit und somit zur Ermittlung von 2D-Informationen des Messbereichs im Rahmen der zweiten Phase und der Bestimmung von Interessenbereichen aus den 2D-Informationen sowie zur Ermittlung von 3D-Informationen im Rahmen der zweiten Phase. Die Auswerteeinheiten sind insbesondere jeweils durch Time-of-Flight-Zähler, sogenannte Time to Digital Converters, gebildet.

Bei der Vorrichtung handelt es sich insbesondere um einen LIDAR-Sensor, insbesondere einen Solid-State-LIDAR-Sensor, der insbesondere keine mechanischen Teile zur Umlenkung von Messpulsen umfasst.

Bei einer Sendeeinheit handelt es sich insbesondere um einen Array von Sendeelementen, wobei die Sendeelemente einzeln und selektiv adressierbar sind. Bei den Sendeelementen handelt es sich insbesondere um VCSEL, das heißt Oberflächenemitter. Ferner kann es sich bei der Sendeeinheit um einen Optical Phased Array handeln. Ferner kann es sich bei den Sendeelementen um Laserdioden, Faserlaser oder LEDs handeln. Ferner können die Sendeelemente adressierbare Flüssigkristalle umfassen.

Bei der Empfangselementen handelt es sich insbesondere um Detektoren, vor allem in Form eines Arrays, vorzugsweise einen Focal Plane Array, insbesondere einen APD Array, am meisten bevorzugt einen SPAD Array. Ferner kann der Array Quantenfilmstrukturen basierend auf quantum dots umfassen. Die Empfangselemente bilden insbesondere Pixel.

Vorteilhafterweise umfasst die Vorrichtung eine Interessenbereichsbestimmungseinheit, die dazu dient, die Interessenbereiche auf Basis der 2D-Informationen zu bestimmen. Diese kann insbesondere "compressive sensing" und/oder eine Bildverarbeitung und/oder mindestens ein neuronales Netz einsetzen. Die Interessenbereichsbestimmungseinheit kann ferner die Größe und/oder die Relevanz der Interessenbereiche definieren und/oder bereits mögliche Objekte identifizieren, die sich in den Interessenbereichen befinden.

Ferner kann die Vorrichtung eine Zuweisungseinheit umfassen, die insbesondere dazu ausgebildet ist, sendeseitig eine Beleuchtung, beispielsweise mindestens ein Beleuchtungssequenz, in der ersten Phase und/oder zweiten Phase festzulegen und auf Basis dieser Sendeeinheiten zuzuordnen, die die Beleuchtung ausführen. Ferner dient die Zuordnungseinheit insbesondere dazu, die Beleuchtung in der zweiten Phase derart festzulegen, dass die Interessenbereiche möglichst hoch aufgelöst werden, während außerhalb der Interessenbereiche liegende Bereiche gröber oder gar nicht aufgelöst werden. Dies geschieht vor allem unter Berücksichtigung von Parametern wie dem Zeitbudget, insbesondere dessen Anteil für die erste Phase und die zweite Phase, die Hardware, insbesondere die begrenzte Anzahl an Auswerteeinheiten sowie Empfangselementen und Sendeelementen, und/oder die in der ersten Phase bestimmten Interessenbereiche, insbesondere deren Größe und/oder Relevanz. Die Zuweisungseinheit weist somit Sendeelemente sendeseitig zu um eine bestimmte Beleuchtung zu erreichen. Ferner weist sie den entsprechenden Empfangselementen Auswerteeinheiten zu, und zwar in Abhängigkeit davon, ob das Empfangselement einem Interessenbereich zugeordnet ist und/oder in Abhängigkeit von dessen Größe und/oder Relevanz. Dies dient dazu eine möglichst hohe Auflösung des mindestens einen Interessenbereichs zu erreichen.

Dabei könnten die Interessenbereichsbestimmungseinheit und die Zuordnungseinheit durch eine einzige Einheit verkörpert sein.

Ferner umfasst die Vorrichtung eine Steuereinheit, die auf Basis der Informationen der Zuordnungseinheit die Sendeelemente und/oder die Empfangselemente und/oder die Auswerteeinheiten steuert.

### Kurze Beschreibung der Zeichnungen

Es zeigen schematisch:
- Figur 1:: ein Verfahrensschema eines erfindungsgemäßen Verfahrens zur Distanzmessung;
- Figur 2:: eine erfindungsgemäße Vorrichtung zur Distanzmessung; und
- Figur 3:: eine Draufsicht auf eine Empfangseinheit der Vorrichtung gemäß Figur 2.

### Bevorzugte Ausführungsformen der Erfindung

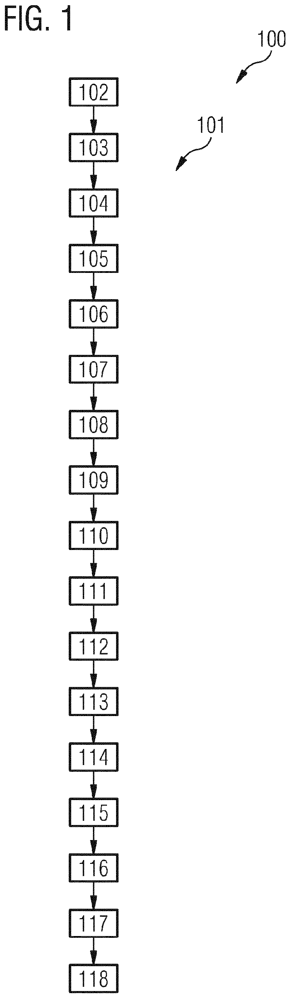

Figur 1 zeigt ein Verfahrensschema eines erfindungsgemäßen Verfahrens 100 zur Distanzmessung.

Das Verfahren 100 umfasst die Erstellung 101 mindestens eines Frames, wobei im Rahmen des Frames 3D-Informationen zumindest eines Unterbereiches eines Messbereiches ermittelt werden. Ein Zeitbudget für den Frame wird auf eine erste Phase zur Bestimmung von mindestens einem Interessenbereich und eine zweite Phase zur Ermittlung von 3D-Informationen aus dem mindestens einen Interessenbereich aufgeteilt 102.

Das Verfahren 100 umfasst die Durchführung 103 der ersten Phase, wobei im Rahmen der ersten Phase mittels einer Sendeeinheit 11 eine Vielzahl von Messpulsen ausgesandt wird 107 und reflektierte Messpulse mittels einer Empfangseinheit 12 empfangen werden 108. Auf Basis der reflektierten Messpulse werden 2D-Informationen des Messbereichs ermittelt 109. Ferner wird insbesondere eine 2D-Intensitätsbild erstellt 110.

Ferner kann im Rahmen der ersten Phase eine Beleuchtung für die erste Phase festgelegt werden 104. Auf Basis der Beleuchtung können sendeseitig Sendeelemente zugeordnet werden 105, mit Hilfe derer die Beleuchtung umgesetzt wird. Ferner kann eine empfangsseitige Zuordnung 106 von Auswerteeinheiten 15 zu Empfangselementen 12a erfolgen, um die reflektierten Messpulse auszuwerten.

Anhand der 2D-Informationen des Messbereiches wird mindestens ein Interessenbereich bestimmt. Dabei kann insbesondere "Compressive Sensing" und/oder ein neuronales Netz und/oder eine Bildverarbeitung verwendet werden. Es kann zudem die Größe und die Relevanz des Interessenbereichs ermittelt werden.

Ferner umfasst das Verfahren 100 die Durchführung 112 der zweiten Phase, wobei erneut mittels einer Sendeeinheit 11 eine Vielzahl von Messpulsen ausgesandt wird 116 und reflektierte Messpulse empfangen werden 117. Ferner werden im Rahmen der zweiten Phase 3D-Informationen des mindestens einen Interessenbereichs ermittelt 118.

Auch im Rahmen der zweiten Phase wird vorzugsweise eine Beleuchtung für die zweite Phase festgelegt 113, die bestimmt, welche Unterbereiche des Messbereichs beleuchtet werden. Dies betrifft insbesondere die Interessenbereiche, die zuvor ermittelt wurden. Erneut werden sendeseitig Sendeelemente an die Beleuchtung der zweiten Phase zugeordnet 114 und empfangsseitig Auswerteeinheiten zu den Empfangselementen 12a zugeordnet 115, sodass die Interessenbereiche möglichst hoch aufgelöst werden können.

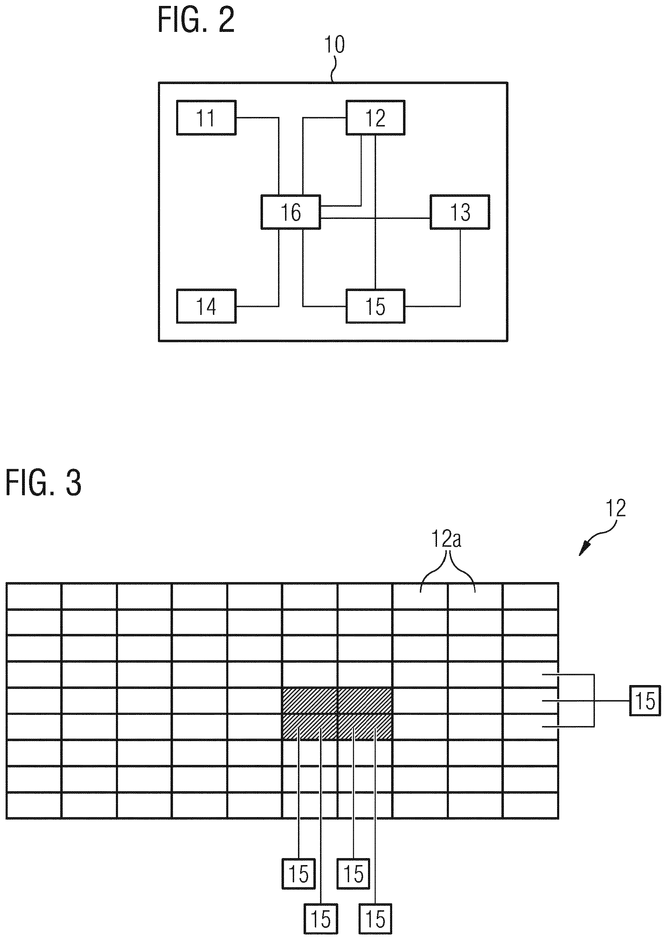

Figur 2 zeigt eine Vorrichtung 10 zur Distanzmessung, die eine Sendeeinheit 11 umfassend Sendeelemente und eine Empfangseinheit 12 umfassend Empfangselemente 12a aufweist.

Ferner umfasst die Vorrichtung 10 eine Interessenbereichsbestimmungseinheit 13, die dazu ausgebildet ist, die Interessenbereiche auf Basis der 2D-Informationen aus der ersten Phase zu ermitteln 109. Die Vorrichtung 10 umfasst Auswerteeinheit 15, die zur Auswertung der reflektierten Messpulse, die von den Empfangselementen 12a detektiert werden, dient. Ferner umfasst die Vorrichtung 10 eine Zuweisungseinheit 14, die dazu ausgebildet ist, sendeseitig Sendeelemente an eine zuvor definierte Beleuchtung der ersten Phase und/oder der zweiten Phase zuzuordnen und empfangsseitig Auswerteeinheiten zu den Empfangselementen 12a zuzuordnen, abhängig davon, wie hochauflösend ein entsprechender Unterbereich des Messbereichs aufgelöst werden soll. Ferner umfasst die Vorrichtung 10 eine Steuereinheit 16, die dazu ausgebildet ist, die zuvor genannten Einheiten zu steuern.

Figur 3 zeigt eine Draufsicht auf die Empfangseinheit 12 der Vorrichtung der Figur 2, wobei die einzelnen Empfangselemente 12a deutlich zu sehen sind.

In Figur 3 ist dargestellt, wie vier schraffierte Empfangselemente 12a einem Interessenbereich zugeordnet sind, der im Rahmen einer ersten Phase bestimmt wurde. Damit der Interessenbereich im Rahmen der zweiten Phase hochauflösend vermessen werden kann, ist jedem dieser vier Empfangselemente 12a jeweils eine eigene Auswerteeinheit 15 zugeordnet. Die üblichen Empfangselemente 12a der Empfangseinheit 12 werden zusammengefasst ausgewertet. Beispielhaft ist angedeutet, wie drei Empfangselemente 12a, die keinem Interessenbereich zugeordnet sind, einer gemeinsamen Auswerteeinheit 15 zugeordnet sind.

### Bezugszeichenliste

- 100: Verfahren
- 101: Erstellung eines Frames
- 102: Aufteilung eines Zeitbudgets auf eine erste und eine zweite Phase
- 103: Durchführung der ersten Phase
- 104: Festlegen einer Beleuchtung für die erste Phase
- 105: Sendeseitige Zuordnung von Sendelementen an Beleuchtung der ersten Phase
- 106: Empfangsseitige Zuordnung von Auswerteeinheiten zu Empfangselementen
- 107: Aussenden einer Vielzahl von Messpulsen
- 108: Empfangen reflektierter Messpulse
- 109: Ermitteln von 2D-Informationen des Messbereichs
- 110: Erstellen einer 2D-Intensitätsbild
- 111: Bestimmen mindestens eines Interessenbereichs
- 112: Durchführung der zweiten Phase
- 113: Festlegen einer Beleuchtung für die zweite Phase
- 114: Sendeseitige Zuordnung von Sendelementen an Beleuchtung der zweiten Phase
- 115: Empfangsseitige Zuordnung von Auswerteeinheiten zu Empfangselementen
- 116: Aussenden einer Vielzahl von Messpulsen
- 117: Empfangen reflektierter Messpulse
- 118: Ermitteln von 3D-Informationen des mindestens einen Interessenbereichs

- 10: Vorrichtung
- 11: Sendeeinheit
- 12: Empfangseinheit
- 12a: Empfangselement
- 13: Interessenbereichsbestimmungseinheit
- 14: Zuweisungseinheit
- 15: Auswerteeinheit
- 16: Steuereinheit

## Patentansprüche

1. Verfahren (100) zur optischen Distanzmessung,
wobei das Verfahren (100) eine Erstellung (101) mindestens eines Frames umfasst,
wobei unter einem Frame ein Einzelbild zu verstehen ist,
wobei im Rahmen des Frames 3D-Informationen zumindest eines Unterbereichs eines Messbereichs ermittelt werden,
**dadurch gekennzeichnet, dass**
das Verfahren (100) die Aufteilung (102) eines Zeitbudgets zur Erstellung des Frames auf eine erste Phase zur Bestimmung von mindestens einen Interessenbereichs und eine zweite Phase zur Ermittlung von 3D-Informationen aus dem mindestens einen Interessenbereich umfasst,
wobei das Verfahren (100) die Durchführung (103) der ersten Phase umfasst,
wobei im Rahmen der ersten Phase mittels einer Sendeeinheit (11) eine Vielzahl von Messpulsen ausgesandt wird (107) und reflektierte Messpulse von einer Empfangseinheit (12) empfangen werden (108),
wobei im Rahmen der ersten Phase 2D-Informationen des Messbereichs ermittelt werden (109),
wobei unter den 2D-Informationen ein 2D-Intensitätsbild des Messbereichs zu verstehen ist,
wobei im Rahmen der ersten Phase keine 3D-Information des Messbereichs und somit keine Laufzeiten der Messpulse der ersten Phase ermittelt werden,
wobei aus den 2D-Informationen mindestens ein Interessenbereich bestimmt wird (111),
wobei es sich bei dem Interessenbereich um einen Unterbereich des Messbereichs handelt,
wobei das Verfahren (100) die Durchführung (112) der zweiten Phase umfasst,
wobei im Rahmen der zweiten Phase mittels einer Sendeeinheit (11) eine Vielzahl von Messpulsen ausgesandt wird (116) und reflektierte Messpulse von der Empfangseinheit (12) empfangen werden (117),
wobei im Rahmen der zweiten Phase 3D-Informationen des mindestens einen Interessenbereichs ermittelt werden (118), und
wobei der Anteil des Zeitbudgets für die erste Phase maximal 50 % des Anteils der zweiten Phase beträgt.

2. Verfahren (100) nach Anspruch 1,
**dadurch gekennzeichnet, dass**
das Verfahren (100) die Erstellung mehrerer Frames umfasst,
wobei das Verfahren (100) für die erste Phase aller Frames ausschließlich eine erste Sendeeinheit und für die zweite Phase aller Frames ausschließlich eine zweite Sendeeinheit verwendet.

3. Verfahren (100) nach Anspruch 1,
**dadurch gekennzeichnet, dass**
das Verfahren (100) nur eine Sendeeinheit (11) verwendet,
wobei das Verfahren (100) die Sendeeinheit (11) mittels zeitlichen Multiplexing für die erste Phase und für die zweite Phase verwendet.

4. Verfahren (100) nach einem der vorangehenden Ansprüche,
**dadurch gekennzeichnet, dass**
in der zweiten Phase im Vergleich zur ersten Phase Messpulse mit höherer Intensität und/oder größerer Pulslänge und/oder höherer Pulsrate ausgesandt werden.

5. Verfahren (100) nach einem der vorangehenden Ansprüche,
**dadurch gekennzeichnet, dass**
die Empfangseinheit (12) eine Vielzahl von Empfangselementen (12a) umfasst, wobei im Rahmen der zweiten Phase Empfangselemente (12a) in Bezug auf mindestens einen Interessenbereich und Empfangselemente (12a) in Bezug auf mindestens einen außerhalb des mindestens einen Interessenbereich liegenden Unterbereich des Messbereichs ausgewertet werden,
wobei im Rahmen der Auswertung in Bezug auf den Interessenbereich zeitlich simultan mehr Empfangselemente (12a) ausgewertet werden im Vergleich zu dem
außerhalb des mindestens einen Interessenbereichs liegenden Unterbereichs des Messbereichs und/oder
wobei im Rahmen der Auswertung in Bezug auf den Interessenbereich Empfangselemente (12a) weniger zusammengefasst ausgewertet werden im Vergleich zu dem außerhalb des mindestens einen Interessenbereichs liegenden Unterbereichs des Messbereichs.

6. Verfahren (100) nach Anspruch 5,
**dadurch gekennzeichnet, dass**
im Rahmen der Auswertung Laufzeiten empfangener Messpulse ermittelt und in ein Histogramm eingetragen werden,
wobei Laufzeiten von Empfangselemente (12a) in Bezug auf mindestens einen Interessenbereich weniger zusammengefasst in Histogramme eingetragen werden im Vergleich zu Laufzeiten von Empfangselemente (12a) eines außerhalb des mindestens einen Interessenbereichs liegenden Unterbereichs des Messbereichs.

7. Verfahren (100) nach einem der vorangehenden Ansprüche,
**dadurch gekennzeichnet, dass**
verschiedene Interessenbereiche unterschiedlich relevant eingestuft werden.

8. Verfahren (100) nach Anspruch 7,
**dadurch gekennzeichnet, dass**
im Rahmen der Auswertung eines relevanteren Interessenbereichs zeitlich simultan mehr Empfangselemente (12a) ausgewertet werden im Vergleich zu einem weniger relevanten Interessenbereich und/oder
wobei im Rahmen der Auswertung eines relevanteren Interessenbereichs Empfangselemente (12a) weniger zusammengefasst ausgewertet werden im Vergleich zu einem weniger relevanten Interessenbereich.

9. Vorrichtung (10) zur optischen Distanzmessung,
**dadurch gekennzeichnet, dass**
die Vorrichtung (10) zur Durchführung eines Verfahrens (100) nach einem der Ansprüche 1 bis 8 ausgebildet ist,
wobei die Vorrichtung (10) eine Sendeeinheit (11) zum Aussenden von Messpulsen für die erste Phase und eine Sendeeinheit (11) zum Aussenden von Messpulsen für die zweite Phase umfasst,
und wobei die Vorrichtung (10) eine Empfangseinheit (12) zum Empfangen reflektierter Messpulse der ersten Phase und der zweiten Phase umfasst.

10. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 8, im Zusammenspiel mit einer Vorrichtung (10) gemäß Anspruch 9, durchzuführen.

11. Computerlesbares Speichermedium, auf dem ein Programm gespeichert ist, das es einem Computer ermöglicht, nachdem es in den Speicher des Computers geladen worden ist, ein Verfahren (100) gemäß einem der Ansprüche 1 bis 8, im Zusammenspiel mit einer Vorrichtung (10) gemäß Anspruch 9, durchzuführen.

## Claims

1. Method (100) for optical distance measurement,
wherein the method (100) comprises creating (101) at least one frame, wherein a frame is understood to be a single image,
wherein 3D information of at least one sub-region of a measuring region is determined within the frame,
**characterized in that**
the method (100) comprises dividing (102) a time budget for creating the frame into a first phase for determining at least one region of interest and a second phase for determining 3D information from the at least one region of interest,
wherein the method (100) comprises performing (103) the first phase,
wherein, during the first phase, a plurality of measuring pulses are transmitted (107) by means of a transmitting unit (11) and reflected measuring pulses are received (108) by a receiving unit (12),
wherein, during the first phase, 2D information of the measuring region is determined (109),
wherein the 2D information is to be understood as a 2D intensity image of the measuring region,
wherein, during the first phase, no 3D information of the measuring region and therefore no transit times of the measuring pulses of the first phase are determined,
wherein at least one region of interest is determined from the 2D information (111),
wherein the region of interest is a sub-region of the measuring region,
wherein the method (100) comprises performing (112) the second phase,
wherein during the second phase, a plurality of measuring pulses are transmitted (116) by means of a transmitting unit (11) and reflected measuring pulses are received (117) by the receiving unit (12),
wherein, during the second phase, 3D information of the at least one region of interest is determined (118), and
wherein the proportion of the time budget for the first phase is a maximum of 50% of the proportion of the second phase.

2. The method (100) according to claim 1,
**characterized in that**
the method (100) comprises creating several frames,
wherein the method (100) exclusively uses a first transmitting unit for the first phase of all frames and exclusively uses a second transmitting unit for the second phase of all frames.

3. The method (100) according to claim 1,
**characterized in that**
the method (100) uses only one transmitting unit (11),
wherein the method (100) uses the transmitting unit (11) by means of time multiplexing for the first phase and for the second phase.

4. The method (100) according to one of the preceding claims,
**characterized in that**
in the second phase, measuring pulses with a higher intensity and/or longer pulse length and/or higher pulse rate are transmitted, compared to the first phase.

5. The method (100) according to one of the preceding claims,
**characterized in that**
the receiving unit (12) comprises a plurality of receiving elements (12a),
wherein, during the second phase, receiving elements (12a) are evaluated with respect to at least one region of interest and receiving elements (12a) are evaluated with respect to at least one sub-region of the measuring region lying outside the at least one region of interest,
wherein, during the evaluation, with respect to the region of interest, more receiving elements (12a) are evaluated simultaneously over time compared to the sub-region of the measuring region lying outside the at least one region of interest and/or
wherein, during the evaluation, with respect to the region of interest, receiving elements (12a) are evaluated less summarized compared to the sub-region of the measuring region lying outside the at least one region of interest.

6. The method (100) according to claim 5,
**characterized in that**
during of the evaluation, transit times of received measuring pulses can be determined and entered in a histogram,
wherein transit times of receiving elements (12a) with respect to at least one region of interest are entered less summarized in histograms compared to transit times of receiving elements (12a) of a sub-region of the measuring region lying outside the at least one region of interest.

7. The method (100) according to one of the preceding claims,
**characterized in that**
different regions of interest are classified as having different relevance.

8. The method (100) according to claim 7,
**characterized in that**
during the evaluation of a more relevant region of interest, more receiving elements (12a) are evaluated simultaneously over time compared to a less relevant region of interest and/or
wherein, during the evaluation of a more relevant region of interest, receiving elements (12a) are evaluated less summarized compared to a less relevant region of interest.

9. Device (10) for optical distance measurement,
**characterized in that**
the device (10) is configured to perform a method (100) according to one of claims 1 to 8,
wherein the device (10) comprises a transmitting unit (11) for transmitting measuring pulses for the first phase and a transmitting unit (11) for transmitting measuring pulses for the second phase,
and wherein the device (10) comprises a receiving unit (12) for receiving reflected measuring pulses of the first phase and the second phase.

10. A computer program product comprising a computer readable storage medium on which is stored a program enabling a computer, after having been loaded into the memory of the computer, to perform a method (100) according to one of claims 1 to 8, in cooperation with a device (10) according to claim 9.

11. A computer-readable storage medium on which is stored a program which, after being loaded into the computer's memory, enables a computer to perform a method (100) according to one of claims 1 to 8, in cooperation with a device (10) according to claim 9.

## Revendications

1. Procédé (100) de mesure de distance optique,
dans lequel le procédé (100) comprend une création (101) d'au moins une trame, dans lequel on entend par une trame une image individuelle,
dans lequel des informations 3D d'au moins une sous-zone d'une zone de mesure sont déterminées dans le cadre de la trame,
**caractérisé en ce que**
le procédé (100) comprend la répartition (102) d'un budget temporel pour la création de la trame sur une première phase destinée à définir au moins une zone d'intérêt et sur une deuxième phase destinée à déterminer des informations 3D à partir de l'au moins une zone d'intérêt,
dans lequel le procédé (100) comprend la mise en œuvre (103) de la première phase,
dans lequel une multitude d'impulsions de mesure sont émises (107) au moyen d'une unité d'envoi (11) dans le cadre de la première phase et des impulsions de mesure réfléchies sont reçues (108) par une unité de réception (12),
dans lequel des informations 2D de la zone de mesure sont déterminées (109) dans le cadre de la première phase,
dans lequel on entend par les informations 2D une image d'intensité 2D de la zone de mesure,
dans lequel aucune information 3D de la zone de mesure et ainsi aucun temps de propagation des impulsions de mesure de la première phase ne sont déterminés dans le cadre de la première phase,
dans lequel au moins une zone d'intérêt est définie (111) à partir des informations 2D,
dans lequel la zone d'intérêt est une sous-zone de la zone de mesure,
dans lequel le procédé (100) comprend la mise en œuvre (112) de la deuxième phase,
dans lequel une multitude d'impulsions de mesure sont émises (116) au moyen d'une unité d'envoi (11) dans le cadre de la deuxième phase et des impulsions de mesure réfléchies sont reçues (117) par l'unité de réception (12),
dans lequel des informations 3D de l'au moins une zone d'intérêt sont déterminées (118) dans le cadre de la deuxième phase, et
dans lequel la proportion du budget temporel pour la première phase est égale au maximum à 50 % de la proportion de la deuxième phase.

2. Procédé (100) selon la revendication 1,
**caractérisé en ce que**
le procédé (100) comprend la création de plusieurs trames,
dans lequel le procédé (100) utilise pour la première phase de toutes les trames exclusivement une première unité d'envoi et pour la deuxième phase de toutes les trames exclusivement une deuxième unité d'envoi.

3. Procédé (100) selon la revendication 1,
**caractérisé en ce que**
le procédé (100) utilise seulement une unité d'envoi (11),
dans lequel le procédé (100) utilise l'unité d'envoi (11) au moyen d'un multiplexage temporel pour la première phase et pour la deuxième phase.

4. Procédé (100) selon l'une quelconque des revendications précédentes,
**caractérisé en ce que**
dans la deuxième phase, en comparaison avec la première phase, des impulsions de mesure sont émises avec une intensité plus élevée et/ou une longueur d'impulsion plus grande et/ou une vitesse d'impulsion plus élevée.

5. Procédé (100) selon l'une quelconque des revendications précédentes,
**caractérisé en ce que**
l'unité de réception (12) comprend une pluralité d'éléments de réception (12a), dans lequel dans le cadre de la deuxième phase, des éléments de réception (12a) sont évalués quant à au moins une zone d'intérêt et des éléments de réception (12a) sont évalués quant à au moins une sous-zone de la zone de mesure située à l'extérieur de l'au moins une zone d'intérêt,
dans lequel, dans le cadre de l'évaluation quant à la zone d'intérêt, davantage d'éléments de réception (12a) sont évalués simultanément dans le temps en comparaison avec la sous-zone de la zone de mesure située à l'extérieur de l'au moins une zone d'intérêt, et/ou
dans lequel, dans le cadre de l'évaluation quant à la zone d'intérêt, des éléments de réception (12a) sont moins évalués de manière regroupée en comparaison avec la sous-zone de la zone de mesure située à l'extérieur de l'au moins une zone d'intérêt.

6. Procédé (100) selon la revendication 5,
**caractérisé en ce que**
dans le cadre de l'évaluation, des temps de propagation d'impulsions de mesure reçues sont déterminés et sont reportés dans un histogramme,
dans lequel des temps de propagation d'éléments de réception (12a) sont moins reportés dans des histogrammes de manière regroupée quant à au moins une zone d'intérêt en comparaison avec des temps de propagation d'éléments de réception (12a) d'une sous-zone de la zone de mesure située à l'extérieur de l'au moins une zone d'intérêt.

7. Procédé (100) selon l'une quelconque des revendications précédentes,
**caractérisé en ce que**
différentes zones d'intérêt sont classées avec une pertinence différente.

8. Procédé (100) selon la revendication 7,
**caractérisé en ce que**
dans le cadre de l'évaluation d'une zone d'intérêt plus pertinente, plusieurs éléments de réception (12a) sont évalués simultanément dans le temps en comparaison avec une zone d'intérêt moins pertinente, et/ou
dans lequel, dans le cadre de l'évaluation d'une zone d'intérêt plus pertinente, des éléments de réception (12a) sont moins évalués de manière regroupée en comparaison avec une zone d'intérêt moins pertinente.

9. Dispositif (10) de mesure de distance optique,
**caractérisé en ce que**
le dispositif (10) est réalisé pour mettre en œuvre un procédé (100) selon l'une quelconque des revendications 1 à 8,
dans lequel le dispositif (10) comprend une unité d'envoi (11) destinée à émettre des impulsions de mesure pour la première phase et une unité d'envoi (11) destinée à émettre des impulsions de mesure pour la deuxième phase,
et dans lequel le dispositif (10) comprend une unité de réception (12) destinée à recevoir des impulsions de mesure réfléchies de la première phase et de la deuxième phase.

10. Produit-programme d'ordinateur, qui comprend un support de stockage lisible par ordinateur, sur lequel est stocké un programme, qui permet à un ordinateur, après qu'il a été téléchargé dans la mémoire de l'ordinateur, de mettre en œuvre un procédé (100) selon l'une quelconque des revendications 1 à 8 en synergie avec un dispositif (10) selon la revendication 9.

11. Support de stockage lisible par ordinateur, sur lequel est stocké un programme, qui permet à un ordinateur, après qu'il a été téléchargé dans la mémoire de l'ordinateur, de mettre en œuvre un procédé (100) selon l'une quelconque des revendications 1 à 8 en synergie avec un dispositif (10) selon la revendication 9.
